# DEMANDE DE BREVET EUROPEEN

(11) **EP 4 765 691 A1**
(43) Date de publication de la demande: **24.06.2026**
(21) Numéro de dépôt: 25224307.6
(22) Date de dépôt: 17.12.2025
(51) Int. Cl.: H04J 3/06, H04L 47/50

(54) **PROCÉDÉ AMÉLIORÉ DE REGROUPEMENT DE MESSAGES EN COMMUNICATION TDMA ; SYSTÈME ET PRODUIT PROGRAMME D'ORDINATEUR ASSOCIÉS**

(30) Priorité: 18.12.2024 FR 2414486
(71) Demandeur: THALES, 92190 Meudon (FR)
(72) Inventeur: ROBERT, Eric, 94628 RUNGIS (FR); Girard, Claude, 78141 VELIZY-VILLACOUBLAY CEDEX (FR)
(74) Mandataire: Lavoix

(57) **Abrégé**

Ce procédé, réalisé dans un système informatique (10) comportant, entre des domaines rouge et noir, une application rouge source de messages et une interface TDMA noire d'émission, ainsi qu'une application rouge destinataire des messages et une interface TDMA noire de réception, consiste à : horodater un message avec sa date de génération ; placer le message sur une pile rouge (62) ; détruire chaque message de la pile rouge présent depuis un temps tel qu'il a déjà été transmis ; transmettre, dans un groupe, les messages de la pile rouge vers le domaine noir ; placer le groupe dans une pile noire (64) en écrasant un contenu de celle-ci ; et, sur réception d'une signalisation TDMA, transmettre le contenu de la pile noire à l'interface TDMA noire d'émission pour insertion dans une trame.

## Description

La présente invention a pour domaine technique général celui des systèmes mettant en œuvre des communications TDMA (« Time Division Multiple Access » en anglais ou « accès multiple par répartition temporelle » en français).

La présente invention a pour domaine technique particulier celui des systèmes dans lesquels l'interface d'accès à la trame TDMA, n'est pas directement accessible à l'application souhaitant transmettre des données, à cause d'une ségrégation de sécurité.

De manière générale, la technique TDMA permet le partage d'un canal de communication entre plusieurs entités d'un système, ou nœuds, en allouant à chacun d'eux un intervalle de temps dans la trame TDMA, celle-ci étant répétée de manière cyclique.

L'intervalle de temps, ou créneau (« slot » en anglais »), alloué à un nœud, permet à ce dernier de transmettre des données. Durant ce créneau, les autres nœuds sont soit passifs, soit à l'écoute du canal pour recevoir des données.

Dans le cas où l'allocation des créneaux TDMA aux nœuds est identique dans chaque trame, l'intervalle régulier de temps entre deux créneaux alloués à un nœud s'appelle la latence TDMA, notée TDMA_L.

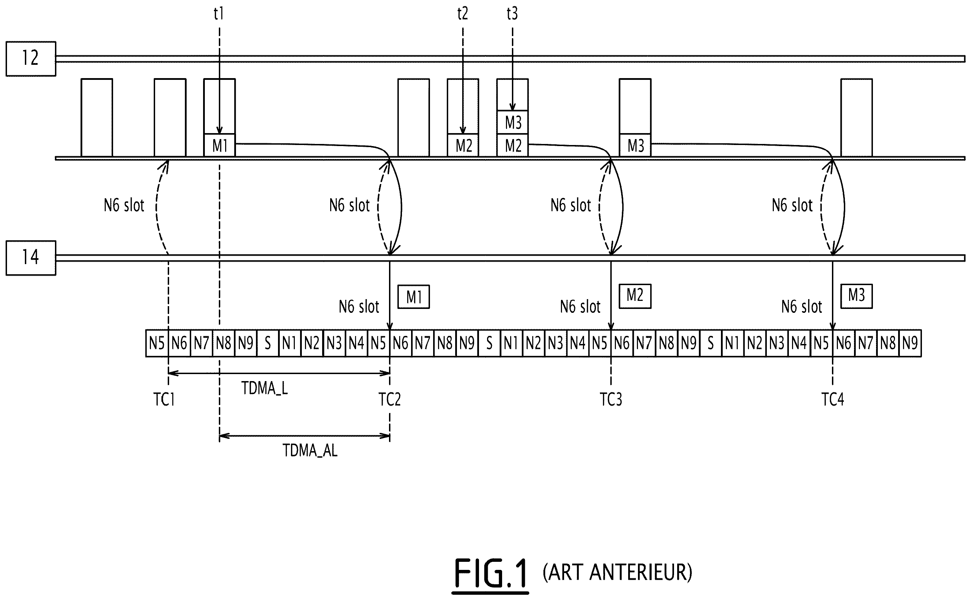

Dans ce cas, illustré sur la figure 1, une trame TDMA présente un en-tête S, suivi d'une succession de créneaux, chaque créneau étant associé à un nœud émetteur Ni (i entier entre 1 et grand N, le nombre total de nœuds N étant par exemple égal à 9 dans l'exemple de la figure 1).

On s'intéresse par exemple plus particulièrement au 6^{e} nœud du système, N6. Il comporte une application 12 et une interface TDMA 14.

L'application 12 génère des données, sous forme de messages Mj (j entier). Un message Mj est généré à un instant tj.

L'application 12 génère ainsi le message M1 à l'instant t1, le message M2 à l'instant t2 et le message M3 à l'instant t3.

L'application 12 place un message généré sur une pile d'émission dans la mémoire du nœud N6.

En général, l'interface TDMA 14 informe directement l'application 12 au moment TCk (k entier) de l'arrivée d'un créneau disponible pour le nœud qu'elle équipe au moyen d'une signalisation TDMA adaptée, comme le message « N6 slot » sur la figure 1.

L'interface TDMA 14 génère ainsi des signalisations aux instants TC1, TC2, TC3, et TC4, à l'arrivée d'un créneau alloué au nœud N6 dans chaque trame TDMA.

L'application 12 répond en transmettant le message se trouvant en bas de sa pile d'émission. Par simplification, on suppose que l'émission d'un message est instantanée suite à réception d'une arrivée d'annonce de créneau.

Ainsi, à l'instant TC2, l'application 12 transmet le message M1 (en le supprimant de la pile) et l'interface TDMA 14 l'incorpore dans le créneau réservé au nœud N6 de la trame TDMA. A l'instant TC3, l'application 12 transmet le message M2 (en le supprimant de la pile) et l'interface TDMA 14 l'incorpore dans le créneau réservé au nœud N6 de la trame TDMA. A l'instant TC4, l'application 12 transmet le message M3 (en le supprimant de la pile) et l'interface TDMA 14 l'incorpore dans le créneau réservé au nœud N6 de la trame TDMA.

Le délai entre la génération d'un message à transmettre par une application cliente d'un nœud et son insertion dans le premier créneau alloué à ce nœud qui est disponible s'appelle la latence d'accès TDMA, notée TDMA_AL.

Dans un système qui ne transmet qu'un message par créneau, on constate que la latence d'accès TDMA peut être supérieure à la latence TDMA. C'est par exemple le cas pour le message M3 où l'intervalle entre t3 et TC4 est supérieur à TDMA_L.

L'utilisation plus optimale de la capacité TDMA offerte à un nœud, en termes de latence ou de débit, peut être obtenue par le regroupement de plusieurs messages dans un unique créneau lorsque la capacité de ce dernier le permet.

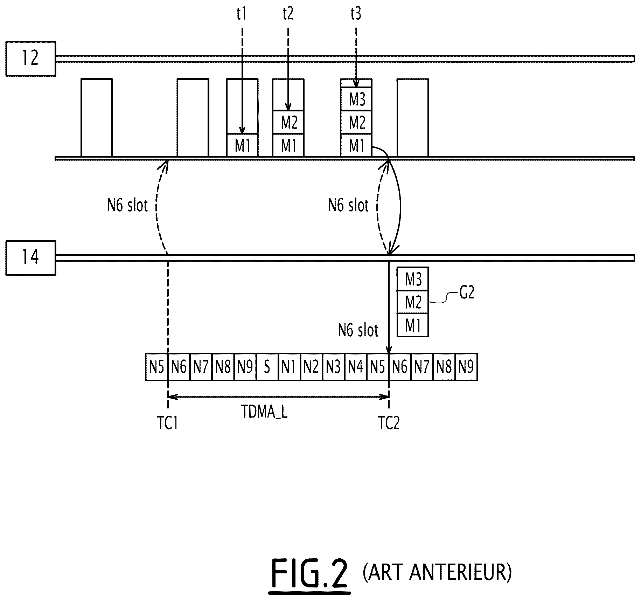

Par exemple, sur la figure 2, l'application 12 génère le message M1 à l'instant t1, le message M2 à l'instant t2 et le message M3 à l'instant t3.

Lorsque l'interface TDMA 14 indique à l'application 12, à l'instant TC2, l'arrivée d'un créneau, l'application cliente 12 lui transmet alors l'intégralité du contenu de sa pile d'émission dans un groupe de messages, G2, constitué des messages M1, M2 et M3 (i.e. de l'ensemble des messages générés entre TC1 et TC2). L'interface TDMA insère le groupe de messages G2 dans le créneau réservé au nœud N6 de la trame TDMA.

Ce groupage sous-entend que l'application 12 ne doit pas générer une quantité de données au cours d'une période égale à TDMA_L supérieure à ce qu'un créneau peut contenir.

Toutefois, dans certaines configurations, l'application ne peut pas recevoir les signalisation TDMA lui permettant de savoir sur quel intervalle temporel regrouper les messages.

C'est typiquement le cas dans des systèmes, comme les systèmes sécurisés, présentant une ségrégation de sécurité entre deux domaines, ou zones, associés à des règles de sécurité différentes : l'application cliente est située dans un domaine dit « rouge », de niveau de sécurité haut, tandis que l'interface d'accès à la trame TDMA est situé dans un domaine dit « noir », de niveau de sécurité bas. Les règles de sécurité peuvent interdire toute traversée d'informations du domaine noir vers le domaine rouge, en particulier la transmission de la signalisation TDMA générée dans le domaine noir par l'interface 14 vers le domaine rouge où réside l'application 12.

Le cadencement de la trame TDMA et la signalisation TDMA n'étant alors plus directement visibles de l'application, celle-ci ne peut pas détecter l'arrivée d'un créneau et ne peut pas implémenter le mécanisme de regroupement de messages décrit précédemment.

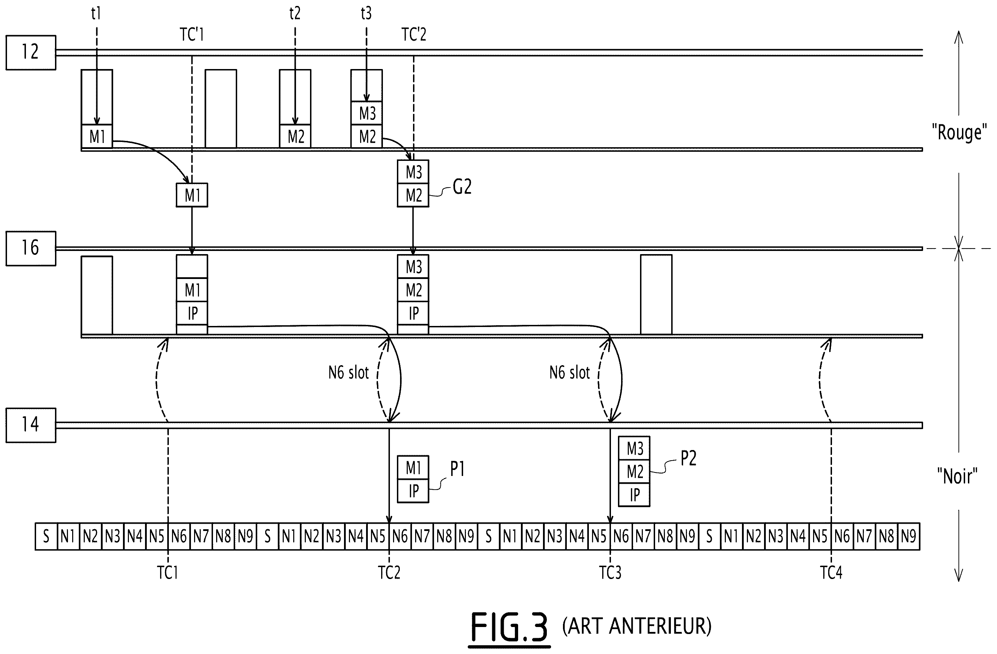

La figure 3 illustre une solution possible pour permettre un regroupement des messages dans une configuration présentant une ségrégation de type rouge/noire.

La délimitation entre domaine noir et domaine rouge est par exemple faite à la traversée d'un moyen de chiffrement 16, interposé entre l'application 12 et l'interface TDMA 14 d'un nœud (N6). Ce moyen de chiffrement est configuré pour bloquer la signalisation TDMA provenant de l'interface TDMA à des fins de cyber sécurité.

Cette solution consiste à implémenter une pile d'émission dans le domaine rouge associée à l'application cliente 12 et une pile d'émission dans le domaine noir associée au moyen de chiffrement 16.

L'application 12 transmet périodiquement l'intégralité du contenu de sa pile vers le moyen de chiffrement 16. La période d'émission de l'application 12 est égale à la latence TDMA, mais les instants d'émission TC'k ne peuvent pas être synchronisés avec les instants TCk d'arrivée des créneaux de la trame TDMA alloués au nœud N6.

C'est le moyen de chiffrement 16, qui, sur réception de la signalisation TDMA, transmet en réponse à l'interface TDMA 14 le contenu de sa pile.

Selon cette solution, l'application dans le domaine rouge essaie en quelque sorte d'aligner le rythme de ses envois de groupes de messages sur la trame TDMA.

Par exemple, à l'instant t1, l'application 12 génère un message M1.

A l'instant TC'1, elle le transmet au moyen de chiffrement 16.

Ce dernier est adapté pour chiffrer les messages reçus de l'application 12 et placer le paquet P correspondant (représenté par le ou les messages et un en-tête IP adapté) dans la pile d'émission noire.

Le moyen de chiffrement 16 place sur la pile noire le paquet P1, qui correspond au chiffrement du message M1.

Alors que le message M1 a été généré à l'instant t1, antérieur à l'instant TC1 d'arrivée d'un créneau, le paquet P1 ne peut être inclus à ce créneau, puisque l'instant TC'1 est postérieur à TC1. Il faut donc attendre le créneau suivant, à l'instant TC2, pour que le paquet P1 soit inclus dans la trame TDMA par l'interface TDMA 14.

Par exemple encore, l'application 12 génère un message M2 à l'instant t2 et un message M3 à l'instant t3.

A l'instant TC'2, l'application 12 transmet le groupe de messages G2 constitué des messages M2 et M3 au moyen de chiffrement 16, qui place le paquet P2 correspondant dans la pile noire.

Ainsi, à l'instant TC3, l'interface TDMA signale au moyen de chiffrement 16 l'arrivée d'un créneau. Ce dernier répond en transmettant le paquet P2 pour qu'il soit intégré à la trame TDMA.

Avec cette solution, l'horloge du domaine rouge déclenchant l'envoi de la file de messages en attente n'est pas synchronisée avec la trame TDMA (et l'arrivée de créneaux alloués au nœud considéré) à cause de la ségrégation entre domaines rouge et noir.

S'il n'y a pas regroupement de messages, on constate un temps de latence d'accès à la trame TDMA qui peut être systématiquement supérieure à la latence TDMA.

S'il y a regroupement de messages, on constate que certains créneaux ne seront pas remplis, alors que des données sont en attente dans le domaine rouge, tandis que d'autres créneaux seront davantage remplis.

De plus, parmi les messages regroupés, la latence d'accès TDMA, TDMA_AL, de certains messages sera réduite par rapport à une solution sans regroupement de messages, tandis que celle d'autres messages sera augmentée.

Ainsi, en agissant indépendamment de la chronologie réelle de la trame TDMA, les mécanismes de transfert de données de l'application s'avèrent sous performants, voire pénalisant pour les performances de communication et ce en terme de latence (les messages peuvent mettre plus de temps à traverser le système de communication que s'ils n'étaient pas groupés) et également en terme de débit (certains créneaux de la trame TDMA peuvent rester inutilisés).

Le but de l'invention est alors de proposer un procédé permettant d'éviter ces inconvénients en offrant à chaque message applicatif un temps de traversée au plus égal à celui qu'il aurait rencontré sans regroupement, tout en optimisant le remplissage des créneaux TDMA.

A cet effet, l'invention a pour objet un procédé, mis en œuvre dans un système informatique ségrégué de manière à comporter des domaines dits « rouge » et « noir », le système comportant : un nœud émetteur hébergeant une application source générant des messages, ladite application source appartenant au domaine rouge, et une interface TDMA d'émission appartenant au domaine noir, l'application source ne pouvant pas recevoir une signalisation TDMA de l'interface TDMA d'émission ; un nœud récepteur hébergeant une application destinataire des messages, l'application destinataire appartenant au domaine rouge, et une interface TDMA de réception appartenant au domaine noir, les interfaces TDMA d'émission et de réception autorisant une communication TDMA de l'une vers l'autre, le procédé comportant, du côté du nœud émetteur, les étapes consistant à, à chaque fois qu'un nouveau message est généré par l'application source, dans le domaine rouge : horodater ledit message avec une date à laquelle il a été généré ; placer ledit message horodaté sur une pile rouge d'émission ; détruire chaque message de la pile rouge d'émission qui est présent dans la pile rouge d'émission depuis un temps tel que ledit message à déjà été transmis vers le domaine noir ; transmettre, dans un groupe, l'ensemble des messages restant de la pile rouge d'émission vers le domaine noir ; dans le domaine noir : recevoir le groupe ; placer le groupe dans une pile noire d'émission en écrasant un contenu courant de la pile noire d'émission ; et lors de la réception d'une signalisation de l'interface TDMA d'émission, transmettre un paquet constitué du contenu de la pile noire d'émission à l'interface TDMA d'émission pour insertion dans une trame TDMA.

Suivant d'autres aspects avantageux de l'invention, le procédé comprend une ou plusieurs des caractéristiques suivantes, prises isolément ou suivant toutes les combinaisons techniquement possibles :
- le procédé comportant en outre, du côté du nœud récepteur, les étapes consistant à : à chaque fois qu'un nouveau paquet est reçu par l'interface TDMA de réception, transmettre le paquet reçu du domaine noir vers le domaine rouge pour obtenir un groupe reçu ; dégrouper les messages reçus contenus dans le groupe reçu ; et comparer des messages reçus et des messages contenus dans une pile rouge de réception : si un message reçu ne se trouve pas parmi les messages de la pile rouge de réception, alors ledit message est transmis à l'application destinataire et est placé dans la pile rouge de réception ; si un message reçu se trouve parmi les messages de la pile rouge de réception, alors ledit message est détruit sans être transmis à l'application destinataire et est supprimé de la pile rouge de réception ; et si un message de la pile rouge de réception ne se trouve pas parmi les messages reçus, alors ledit message est supprimé de la pile rouge de réception.
- la communication TDMA est fondée sur un protocole de communication, par exemple un protocole de communication IP.

L'invention a également pour objet un système informatique ségrégué de manière à présenter des domaines dits « rouge » et « noir », et comportant un nœud émetteur hébergeant une application source dans le domaine rouge et une interface TDMA d'émission dans le domaine noir, l'application source ne pouvant pas recevoir une signalisation TDMA de l'interface TDMA d'émission, un nœud récepteur hébergeant une application destinataire dans le domaine rouge et une interface TDMA de réception dans le domaine noir, les interfaces TDMA d'émission et de réception autorisant une communication TDMA de l'une vers l'autre.

Suivant d'autres aspects avantageux de l'invention, le système comprend une ou plusieurs des caractéristiques suivantes, prises isolément ou suivant toutes les combinaisons techniquement possibles :
- une ségrégation du nœud émetteur, respectivement du nœud récepteur, est réalisée par un moyen de chiffrement exécuté par le nœud émetteur, respectivement le nœud récepteur.
- le nœud émetteur comporte : une unité rouge d'émission, située dans le domaine rouge, et associée à une pile rouge d'émission ; et une unité noire démission, située dans le domaine noir, et associée à une pile noire d'émission.
- le nœud récepteur comporte : une unité rouge de réception, associée à une pile rouge de réception.
- l'unité rouge d'émission, l'unité noire d'émission et/ou l'unité rouge de réception est du type logiciel de médiation.
- le domaine rouge est un domaine de niveau de sécurité haut et le domaine noir est un domaine de niveau de sécurité bas.

L'invention concerne enfin un programme d'ordinateur comportant des instructions logicielles qui, lorsqu'elles sont exécutées par le système informatique précédent, mettent en œuvre le procédé précédent.

L'invention apparaîtra plus clairement à la lecture de la description qui va suivre, donnée uniquement à titre d'exemple non limitatif, et faite en référence aux dessins annexés dans lesquels :
- La figure 1 est un chronogramme de l'insertion de messages dans une trame TDMA sans regroupement des messages, dans un système où l'application reçoit la signalisation TDMA, selon l'état de la technique ;
- La figure 2 est un chronogramme de l'insertion de messages dans une trame TDMA avec regroupement des messages, dans un système où l'application reçoit la signalisation TDMA, selon l'état de la technique ;
- La figure 3 est un chronogramme de l'insertion de messages dans une trame TDMA sans et avec regroupement de messages, dans un système où l'application ne reçoit pas la signalisation TDMA, selon l'état de la technique ;
- La figure 4 est une représentation schématique sous forme d'unités fonctionnelles d'un mode de réalisation possible d'un système pour la mise en œuvre du procédé selon l'invention ;
- La figure 5 est une représentation schématique sous forme de blocs d'un mode de réalisation possible du procédé selon l'invention ; et,
- La figure 6 est un chronogramme de l'insertion de messages dans une trame TDMA avec regroupement de messages, dans un système où l'application ne reçoit pas la signalisation TDMA, selon l'invention.

L'invention utilise un mécanisme de regroupement des messages à transmettre, couplé à un horodatage des messages qui permet de retirer les messages trop anciens du groupe de messages avant son envoi.

En regard de ce mécanisme employé par un nœud émetteur, un mécanisme complémentaire implémenté par un nœud récepteur permet de détecter et supprimer les messages qui auraient été envoyés plusieurs fois, par effet collatéral du mécanisme de regroupement.

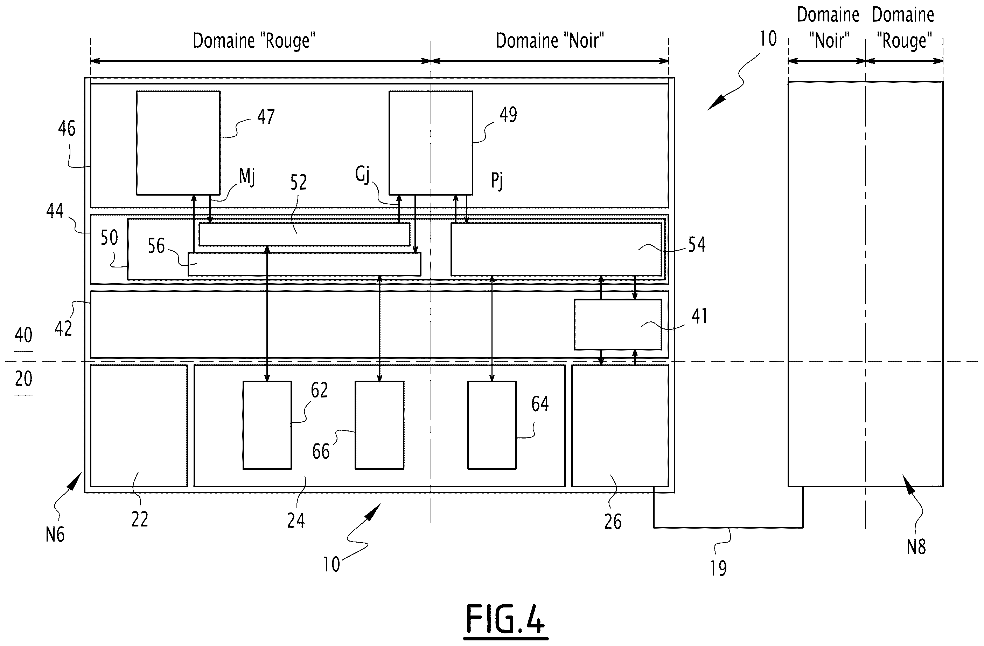

La figure 4 représente un mode de réalisation possible d'un système pour la mise en œuvre du procédé selon l'invention.

Le système 10 comporte au moins deux nœuds, référencés N6 et N8 sur la figure 4, en communication par une liaison TDMA 19.

Ces deux nœuds sont identiques entre eux. Un nœud peut fonctionner alternativement en émission de messages et en réception de messages. Dans ce qui suit, le nœud N6 sera plus précisément détaillé, mais une description identique pourrait être faite pour le nœud N8.

Un nœud, comme le nœud N6, est un ordinateur comportant une couche matérielle 20 et une couche logicielle 40.

La couche matérielle 20 comporte un moyen de calcul, comme un processeur 22, des moyens de mémorisation, comme une mémoire 24, et un moyen de communication TDMA, comme une carte de communication TDMA 26.

La couche logicielle 40 comporte une couche de système d'exploitation 42, une couche de médiation 44, et une couche applicative 46.

La couche de système d'exploitation 42 comporte notamment un pilote de communication TDMA 41, permettant les échanges de données avec la carte 26. Le pilote 41 et la carte 26 constituent ensemble une interface d'accès à la trame TDMA.

La couche applicative 46 comporte notamment une application cliente 47, comme une application de service, qui, côté nœud émetteur N6, est propre à générer des messages et qui, côté noeud récepteur N8, est propre à recevoir des messages. Le message Mj est généré à l'instant tj par l'application 47.

La couche applicative 46 comporte également une application de chiffrement 49.

L'application de chiffrement 49 délimite dans chaque noeud un domaine dit « rouge » dans lequel se trouve notamment l'application cliente 47 et un domaine dit « noir » dans lequel se trouve notamment l'interface TDMA.

Selon l'invention, la couche de médiation 44 intègre un logiciel 50.

Le logiciel 50 comporte différentes unités :
- une unité rouge d'émission 52 ;
- une unité noire d'émission/réception 54 ; et,
- une unité rouge de réception 56.

À chaque unité du logiciel 50 est associée une pile dans la mémoire 24. Ainsi, à l'unité rouge d'émission 52 est associée une pile rouge d'émission 62, à l'unité noire 54 est associée une pile noire de transmission 64, et à l'unité rouge de réception 56 est associée une pile rouge de réception 66.

La pile noire de transmission 64 présente une taille égale à la capacité maximale d'un créneau de transmission TDMA.

La pile rouge d'émission 52 a une taille qui est définie de telle façon qu'en tenant compte des différentes données qui seront ajoutées au contenu de cette pile lors de sa transmission (comme un en-tête IP, des données de chiffrement, etc.), le paquet arrivant dans le domaine noir ne dépasse pas la capacité de la pile noire, i.e. d'un créneau TDMA.

En émission, l'unité rouge d'émission 52 est adaptée pour recevoir les messages Mj générés par l'application cliente 47. Elle est adaptée pour construire des groupes de messages Gj à partir des messages reçus. Elle est adaptée pour transmettre les groupes de messages à l'application de chiffrement 49 à chaque fois qu'un nouveau message Mi est reçu.

L'application de chiffrement 49 est adaptée pour chiffrer un groupe de messages Gj provenant de l'unité rouge d'émission 52. Elle est adaptée pour transmettre le paquet Pj ainsi obtenu à l'unité noire 54.

L'unité noire 54 est adaptée pour recevoir les paquets de données Pj générés par l'application de chiffrement 49. Elle est adaptée pour mémoriser le dernier paquet de données reçu sur la pile noire de transmission 64. Elle est adaptée pour transmettre le paquet de données de la pile noire de transmission 64 au pilote 41 lorsque celui-ci lui transmet une signalisation d'arrivée d'un créneau TDMA.

En réception, l'unité noire 54 est adaptée pour recevoir les paquets de données extrait d'un créneau TDMA par le pilote 41. Elle est adaptée pour transmettre, de manière transparente, le paquet de données Pj à l'application de chiffrement 49.

L'application de chiffrement 49 est adaptée pour déchiffrer un paquet de données Pj provenant de l'unité noire de réception. Elle est adaptée pour transmettre le groupe de messages Gj extraits de ce paquet vers l'unité rouge de réception 56.

L'unité rouge de réception 56 est adaptée pour recevoir un groupe de messages Gj de l'application de chiffrement 49. Elle est adaptée pour filtrer les messages Mj de ce groupe. Elle est avantageusement adaptée pour transmettre une unique occurrence de chaque message Mj reçu vers l'application cliente 47.

Ainsi, le mode de réalisation de la figure 4 correspond à une implémentation sous forme d'un logiciel de médiation (« middleware ») offrant différents services à une application cliente.

Le logiciel 50 présente une interface, du type interface de programmation d'applications - API (« Application Programming Interface ») ou interface protocolaire, offrant des services d'émission et de réception de messages.

Le logiciel 50 peut également offrir une signalisation permettant à l'application cliente d'obtenir des informations en cas de destruction de ses messages du fait de dépassement de la capacité de la pile rouge d'émission.

De préférence, le système 10 est un système de communication IP (« Internet Protocol ») dans lequel un groupe de messages Gj est « empaqueté » dans une première trame IP, qui est ensuite transmise à l'application de chiffrement. En variante, des systèmes mettant en œuvre d'autres protocoles de communication sont envisageables.

La sortie de l'application de chiffrement est une seconde trame IP dont la charge utile est constituée par le chiffrement du premier paquet, et par conséquent du groupe de messages.

Toutefois, le principe de l'invention est compatible d'autres types de protocoles ou technologies de communication de messages.

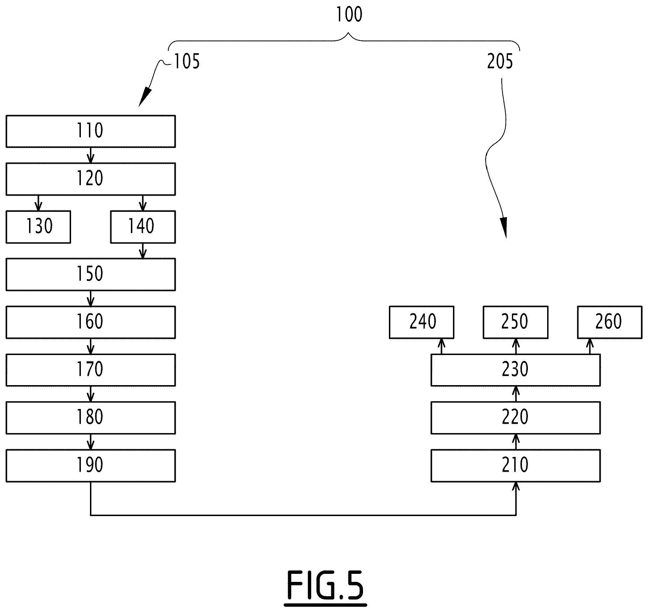

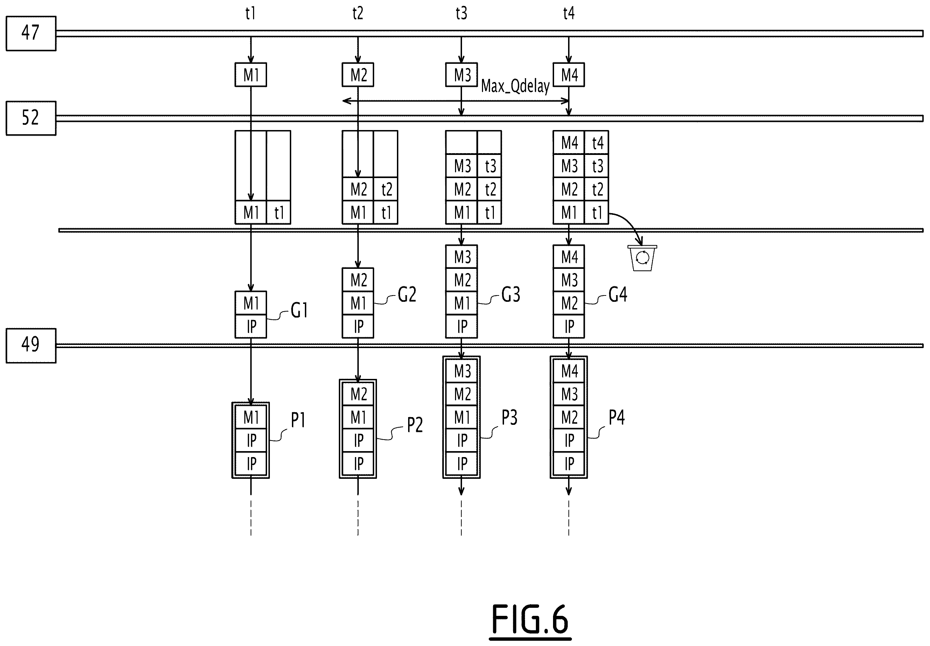

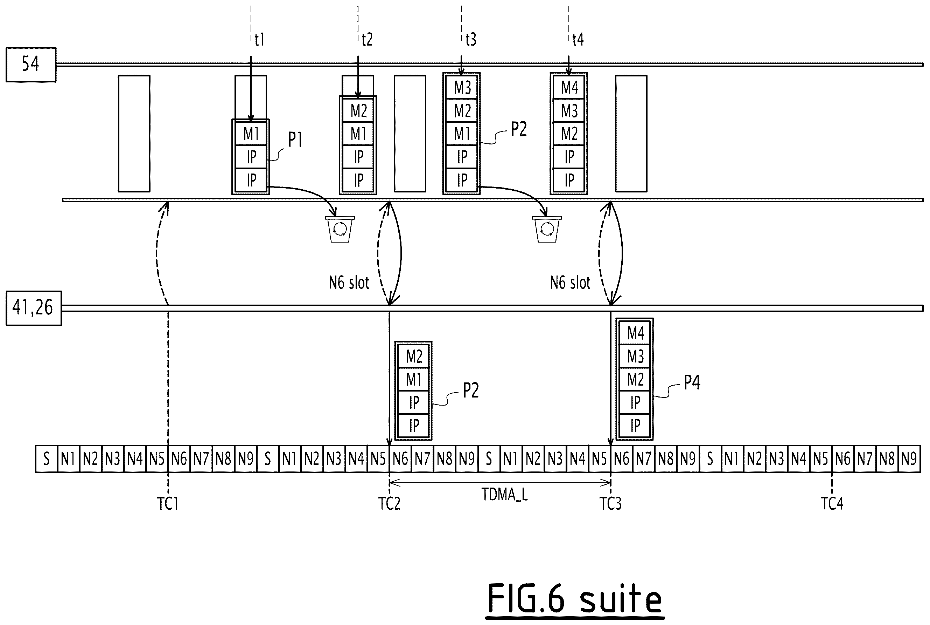

Un mode de réalisation du procédé selon l'invention est représenté sur la figure 5 et sa mise en œuvre par le chronogramme de la figure 6.

Le procédé 100 comporte une phase d'émission 105 mise en œuvre côté nœud émetteur, par exemple le nœud N6, hébergeant une application cliente, comme l'application 47, fonctionnant alors en tant qu'application source des messages.

A l'instant tj, l'application cliente source génère (étape 110) un nouveau message applicatif Mj et le transmet à l'unité rouge d'émission 52.

On suppose que chaque message applicatif intègre les informations permettant de l'identifier de façon unique. Ainsi chaque message Mj est identifié par un identifiant de message Idj. Si tel n'est pas le cas, ces informations peuvent être générées et gérées par l'unité rouge d'émission 52.

Par exemple, comme illustré par le chronogramme de la figure 6, le message M1 est généré à l'instant t1, le message M2 est généré à l'instant t2, le message M3 est généré à l'instant t3 et le message M4 est généré à l'instant t4 par l'application 47.

Dans l'étape 120, l'unité rouge d'émission 52 cherche à placer le nouveau message Mj reçu en haut de la pile rouge d'émission 62.

Si la pile rouge d'émission 62 est pleine, alors, dans une étape 130, l'unité rouge d'émission 52 détruit le message Mj et informe l'application cliente 47 par une signalisation adaptée.

Sinon, dans une étape 140, le message Mj est horodaté avec la date tj à laquelle il a été généré et le message horodaté est placé dans la pile rouge d'émission.

Par exemple, la pile initialement vide, contient à l'instant t1 le message horodaté (M1; t1) puis, à l'instant t2, les messages horodatés (M1; t1) et (M2; t2), puis, à l'instant t3, les messages horodatés (M1; t1), (M2; t2) et (M3; t3), et, à l'instant t4, les messages horodatés (M1 ; t1), (M2; t2), (M3; t3) et (M4; t4).

A chaque instant tj où un nouveau message Mj est ajouté dans la pile rouge d'émission 62, l'unité rouge d'émission 52 procède, à un nettoyage de la pile rouge d'émission 62 en parcourant (étape 150) l'ensemble de son contenu, et en détruisant tous les messages Mk dont la date tk est antérieure à : tj - *Max_Qdelay,* où *Max*_*Qdelay* est un paramètre de durée qui est configuré de telle sorte que si un message se trouve dans la pile rouge d'émission 52 depuis plus longtemps que *Max_Qdelay,* alors il a nécessairement été émis par le système de communication TDMA.

On a ainsi : *Max_Delay = TDMA_L + d , où : TDMA_L* est la latence TDMA, c'est-à-dire l'intervalle temporel entre l'occurrence de deux créneaux alloués au nœud N6 ; et *d* est un temps de garde, qui permet de tenir compte des temps de traitement des différents composants du chemin de transmission. Pour le cas d'un système idéal, d est égal à 0. C'est ce cas qui est retenu dans la suite de la présente description pour des raisons de simplification de l'exposé.

Par exemple, à l'instant t1, la pile contient uniquement le message M1 et aucun message de la pile n'est détruit. A l'instant t2, la pile contient les messages M1 et M2, mais l'intervalle entre les instants t1 et t2 étant inférieur à *Max_Delay,* aucun message de la pile n'est détruit. A l'instant t3, la pile contient les messages M1, M2 et M3, mais l'intervalle entre les instants t1 et t3 étant inférieur à *Max_Delay,* aucun message de la pile n'est détruit. A l'instant courant t4, la pile contient les messages M1, M2, M3 et M4, et puisque l'intervalle entre les instants t1 et t4 est supérieur à *Max_Delay,* alors le message M1 est considéré comme périmé, et est détruit. M2 est conservé puisque l'intervalle entre les instants t2 et t4 est inférieur à *Max_Delay.* Cette destruction du message horodaté (M1 ; t1) est symbolisée par une « corbeille » sur la figure 6.

Puis, après nettoyage de la pile rouge d'émission 62, dans une étape 160, l'unité rouge d'émission 52 transmet l'ensemble des messages restant dans la pile rouge d'émission 62 vers l'application de chiffrement 49.

Pour ce faire, un unique paquet IP, Gj, regroupant les différents messages de la pile rouge d'émission est généré et envoyé à l'application de chiffrement 49.

Par exemple, à l'instant t1 un paquet IP G1 regroupant le seul message M1 est transmis vers l'application de chiffrement. Ainsi, à l'instant t2 un paquet IP G2 regroupant les messages M1 et M2 est transmis vers l'application de chiffrement. Ainsi, à l'instant t3 un paquet IP G3 regroupant les messages M1, M2 et M3 est transmis vers l'application de chiffrement. Ainsi, à l'instant t4 un paquet IP G4 regroupant les messages M2, M3 et M4 est transmis vers l'application de chiffrement.

Dans l'étape 170, l'application de chiffrement 49 chiffre le paquet IP Gj de manière à obtenir une paquet IP chiffré Pj. Ce dernier est transmis à l'unité noire 54.

Par exemple, à l'instant t1 un paquet IP chiffré P1 contenant le seul message M1 chiffré est reçu côté noir. Ainsi, à l'instant t2 un paquet IP chiffré P2 contenant les messages M1 et M2 chiffrés est reçu côté noir. A l'instant t3 un paquet IP chiffré P3 contenant les messages M1, M2 et M3 chiffrés est reçu côté noir. A l'instant t4 un paquet IP chiffré P4 regroupant les messages M2, M3 et M4 chiffrés est reçu côté noir.

Dans l'étape 180, lors de la réception d'un paquet chiffré Pj, l'unité noire d'émission/réception 54 le place dans la pile noire de transmission 64.

Si cette pile noire 64 contient déjà un paquet de données Pj-1, ce dernier est détruit, puisque les messages qu'il contient, se trouvent également dans le paquet chiffré, Pj, nouvellement reçu.

Par exemple, la pile noire 64 est initialement vide. A l'instant t1, le paquet chiffré P1, contenant le seul message M1, est placé dans la pile 64. A l'instant t2, le paquet chiffré P1 est détruit et le paquet chiffré P2, regroupant les messages M1 et M2, est placé dans la pile 64. A l'instant TC2, la pile noire 64 est vidée de sorte qu'à l'instant t3, le paquet chiffré PC3, regroupant les message M1, M2 et M3, est placé dans la pile 64. A l'instant t4, le paquet chiffré P3 est détruit et le paquet chiffré P4, regroupant les message M2, M3 et M4 est placé dans la pile 64.

A l'étape 190, lorsque le pilote de communication TDMA 41 transmet une signalisation d'arrivée de créneau TDMA à l'unité noire 54, cette dernière répond en transmettant le contenu de la pile noire 64, qui est par conséquent vidée.

Par exemple, si un premier créneau arrive à un instant TC1, avant l'instant t1, comme la pile noire 64 est vide, aucun paquet chiffré n'est transmis dans le premier créneau TDMA.

Par exemple, si un second créneau arrive à un instant TC2, entre les instants t2 et t3, c'est le paquet chiffré P2 qui est transmis dans le second créneau TDMA.

Si un troisième créneau arrive à un instant TC3, postérieur à l'instant t4, c'est le paquet chiffré P4 qui est transmis dans le troisième créneau TDMA.

On constate bien que la destruction du groupe de messages M1, M2, M3 et son remplacement par le groupe de message M2, M3, M4 dans la pile noire 64 à l'instant t4, s'effectuent alors que le message M1 a déjà été émis dans un précédent créneau TDMA.

Avec un tel mécanisme, tant que la capacité demandée au système de communication TDMA reste inférieure ou égale à celle pouvant être servie par les trains de créneaux alloués, alors la latence maximale d'accès à la trame TDMA est inférieure ou égale à la latence TDMA, *TDMA_L.*

Le procédé 100 comporte une phase de réception 205 mise en œuvre côté nœud récepteur d'un message, par exemple encore le nœud N6, hébergeant une application cliente 47, fonctionnant alors en tant qu'application destinataire des messages.

Dans l'étape 210, l'interface TDMA transmet à l'unité noire 54 le paquet chiffré Pj extrait de la trame TDMA. Celui-ci est transmis directement au moyen de chiffrement 49 pour déchiffrer son contenu.

Dans la phase 105 d'émission, le groupage des messages dans le domaine rouge implique que certains messages Mj peuvent être envoyés deux fois, dans deux paquets de messages successifs.

Par exemple, dans l'exemple particulier de la figure 6, le message M2 est transmis une première fois à l'instant TC2 et une seconde fois à l'instant TC3.

Selon le procédé 100, un message ne peut être transmis plus de deux fois.

Afin que le regroupelent des messages soit totalement transparent aux applications clientes en communication l'une avec l'autre, il convient donc que le nœud récepteur hébergeant l'application cliente destinataire mette en œuvre des étapes de détection et d'élimination de tels duplicatas.

Pour ce faire, le nœud récepteur N6 maintient une pile rouge de réception 66, stockant les messages reçus.

Lorsqu'un groupe Gj de messages est reçu par l'unité rouge de réception 56, les messages sont d'abord dégroupés dans une étape 220.

Puis, dans une étape 230, pour chaque message dégroupé, une recherche de duplicata est faite dans la pile rouge de réception 66, en utilisant l'identifiant de message Idj.

Trois cas sont envisageables : le message reçu est soit Nouveau, soit Dupliqué, soit Non-Dupliqué.

Un message est Nouveau s'il est dans le groupe de messages nouvellement reçu Gj, mais pas dans la pile rouge de réception 66.

Alors dans l'étape 240, il est transmis à l'application destinataire 47. Il est également stocké dans la pile rouge de réception.

Un message est Dupliqué s'il est dans le groupe de messages nouvellement reçu Gj et dans la pile rouge de réception 66 des messages reçus.

Alors dans une étape 250, il est détruit sans être transmis à l'application destinataire et il est retiré de la pile rouge de réception.

Un message est Non-Dupliqué s'il n'est pas dans le groupe de messages Gj nouvellement reçu, mais qu'il est présent dans la pile rouge de réception 66. Il est alors retiré de la pile rouge de réception ne risquant plus d'être reçu une seconde fois.

La solution propose un mécanisme de groupage des messages applicatifs opérant en domaine rouge :
- qui ne pénalise jamais les performances de communication TDMA d'un nœud ;
- qui réduit le délai de transmission pour les rafales de paquets émis pendant une période égale à la latence TDMA ;
- qui n'augmente pas la latence d'accès TDMA des messages par rapport à un système n'implémentant pas le groupage de messages ;
- qui optimise l'utilisation des créneaux alloués à un nœud et donc augmente le débit effectif de transmission par rapport à une solution sans groupage ;
- qui induit une latence d'accès TDMA (TDMA_AL) inférieure ou égale à celle d'une solution sans groupage de message et qui est majorée par la latence TDMA (TDMA_L) ;
- qui est indépendant des applications source et destinataire, ainsi que du protocole de communication effectivement mis en œuvre.

Pour les applications ne pouvant pas avoir accès aux informations temporelles d'un système de communication TDMA sous-jacent, l'invention apporte les avantages suivants :
- en assurant à la fois le groupage et le dégroupage des messages, l'invention offre un mécanisme transparent pour les applications servies ;
- L'invention est compatible avec tout type de système de communication TDMA ; et,
- L'invention n'a pas d'impact sur le système de communication TDMA.

L'invention trouve des applications dans tout système de communication fondé sur une technologie TDMA, comme les systèmes de communication professionnels / militaires / industriels, présentant une ségrégation de sécurité.

## Revendications

1. Procédé (100) mis en œuvre dans un système informatique (10) ségrégué de manière à comporter des domaines dits « rouge » et « noir »,
le système comportant :
- un nœud émetteur hébergeant une application source générant des messages, ladite application source appartenant au domaine rouge, et une interface TDMA d'émission appartenant au domaine noir, l'application source ne pouvant pas recevoir une signalisation TDMA de l'interface TDMA d'émission ;
- un nœud récepteur hébergeant une application destinataire des messages, l'application destinataire appartenant au domaine rouge, et une interface TDMA de réception appartenant au domaine noir,
les interfaces TDMA d'émission et de réception autorisant une communication TDMA de l'une vers l'autre,
le procédé comportant, du côté du nœud émetteur, les étapes consistant à
à chaque fois qu'un nouveau message est généré par l'application source,
dans le domaine rouge :
- horodater ledit message avec une date à laquelle il a été généré ;
- placer ledit message horodaté sur une pile rouge d'émission (62) ;
- détruire chaque message de la pile rouge d'émission (62) qui est présent dans la pile rouge d'émission depuis un temps tel que ledit message a déjà été transmis vers le domaine noir;
- transmettre, dans un groupe, l'ensemble des messages restant de la pile rouge d'émission (62) vers le domaine noir ;
dans le domaine noir :
- recevoir le groupe ;
- placer le groupe dans une pile noire d'émission (64) en écrasant un contenu courant de la pile noire d'émission ; et,
- lors de la réception d'une signalisation de l'interface TDMA d'émission, transmettre un paquet constitué du contenu de la pile noire d'émission (64) à l'interface TDMA d'émission pour insertion dans une trame TDMA.

2. Procédé selon la revendication 1, comportant en outre, du côté du nœud récepteur, les étapes consistant à, à chaque fois qu'un nouveau paquet est reçu par l'interface TDMA de réception :
- transmettre le paquet reçu du domaine noir vers le domaine rouge pour obtenir un groupe reçu;
- dégrouper les messages reçus contenus dans le groupe reçu ; et,
- comparer des messages reçus et des messages contenus dans une pile rouge de réception (66) :
∘ si un message reçu ne se trouve pas parmi les messages de la pile rouge de réception, alors ledit message est transmis à l'application destinataire et est placé dans la pile rouge de réception ;
∘ si un message reçu se trouve parmi les messages de la pile rouge de réception, alors ledit message est détruit sans être transmis à l'application destinataire et est supprimé de la pile rouge de réception ; et,
∘ si un message de la pile rouge de réception ne se trouve pas parmi les messages reçus, alors ledit message est supprimé de la pile rouge de réception.

3. Procédé selon l'une quelconque des revendications précédentes, dans lequel la communication TDMA est fondée sur un protocole de communication, par exemple un protocole de communication IP.

4. Système informatique (10) adapté pour la mise en œuvre d'un procédé (100) selon l'une quelconque des revendications précédentes, le système informatique étant ségrégué de manière à présenter des domaines dits « rouge » et « noir », et comportant un nœud émetteur hébergeant une application source dans le domaine rouge et une interface TDMA d'émission dans le domaine noir, l'application source ne pouvant pas recevoir une signalisation TDMA de l'interface TDMA d'émission, un nœud récepteur hébergeant une application destinataire dans le domaine rouge et une interface TDMA de réception dans le domaine noir, les interfaces TDMA d'émission et de réception autorisant une communication TDMA de l'une vers l'autre.

5. Système selon la revendication 4, dans lequel une ségrégation du nœud émetteur, respectivement du nœud récepteur, est réalisée par un moyen de chiffrement (49) exécuté par le nœud émetteur, respectivement le nœud récepteur.

6. Système selon la revendications 4 ou la revendication 5, dans lequel le nœud émetteur comporte :
- une unité rouge d'émission (52), située dans le domaine rouge, et associée à une pile rouge d'émission (62) ; et,
- une unité noire démission (54), située dans le domaine noir, et associée à une pile noire d'émission (64).

7. Système selon l'une quelconque des revendications 4 à 6, dans lequel le nœud récepteur comporte : une unité rouge de réception (56), associée à une pile rouge de réception (66).

8. Système selon la revendication 6 ou la revendication 7, dans lequel l'unité rouge d'émission, l'unité noire d'émission et/ou l'unité rouge de réception est du type logiciel de médiation.

9. Système selon l'une quelconque des revendications 4 à 7, dans lequel le domaine rouge est un domaine de niveau de sécurité haut et le domaine noir est un domaine de niveau de sécurité bas.

10. Programme d'ordinateur comportant des instructions logicielles qui, lorsqu'elles sont exécutées par un nœud, émetteur et/ou récepteur, d'un système (10) selon l'une quelconque des revendications 4 à 9, mettent en œuvre un procédé (100) selon l'une quelconque des revendications 1 à 3.
